# FASCICULE DE BREVET EUROPEEN

(11) **EP 2 874 524 B1**
(45) Date de publication et mention de la délivrance du brevet: **18.11.2020**
(21) Numéro de dépôt: 13729976.4
(22) Date de dépôt: 16.05.2013
(51) Int. Cl.: A47J 36/32, A47J 36/02, F24C 7/08

(54) **ARTICLE, ENSEMBLE ET SYSTEME CULINAIRE A DETECTION DE COMPOSES VOLATILS, ET UN PROCEDE DE REALISATION DE L'ARTICLE CULINAIRE**
KULINARISCHER ARTIKEL, ANORDNUNG UND SYSTEM MIT DETEKTION VON FLÜCHTIGEN VERBINDUNGEN UND VERFAHREN ZUR HERSTELLUNG DES KULINARISCHEN ARTIKELS
CULINARY ITEM, ASSEMBLY AND SYSTEM WITH DETECTION OF VOLATILE COMPOUNDS, AND METHOD FOR PRODUCING THE CULINARY ITEM

(30) Priorité: 16.05.2012 FR 1254541
(43) Date de publication de la demande: 27.05.2015
(73) Titulaire: SEB S.A., 69130 Ecully (FR)
(72) Inventeur: PERILLON, Jean-Luc, 26130 Saint Paul Trois Chateaux (FR); CAILLIER, Laurent, 74370 Pringy (FR)
(74) Mandataire: SEB Developpement Brevets
(86) Numéro de dépôt international: PCT/FR2013/051079
(87) Numéro de publication internationale: WO 2013/171436

(56) Documents cités:
- WO-A2-2013/001417
- DE-A1-102005 035 564
- US-A- 4 311 895
- US-A1- 2008 193 614
- US-A1- 2010 318 230
- US-B2- 7 923 664
- DR HEIKO ULMER: "Mit VOC-Sensoren die Luft-guete richtig messen", INTERNET CITATION, février 2010 (2010-02), XP009170995, Extrait de l'Internet: URL:http://www.ipm.fraunhofer.de/content/d am/ipm/de/PDFs/Newsletter/Gasnewsletter_2- 2010_Internet.pdf [extrait le 2013-07-09]

## Description

L'invention concerne un article culinaire, un ensemble, et un système culinaire à détection de composés volatils, ainsi qu'un procédé de réalisation dudit article.

### 1. Domaine de l'invention

La présente invention concerne le domaine des articles culinaires pour la préparation d'aliments. Plus précisément, l'invention concerne un article culinaire muni de moyens de détection de composés volatils qui sont issus de la cuisson de l'aliment. Elle vise également un ensemble et un système comportant au moins un article culinaire tel que ci-dessus. L'invention concerne aussi un procédé de réalisation de tels articles culinaires. Ces derniers peuvent être notamment des casseroles, des poêles, des sauteuses, des couvercles, etc.

### 2. Art antérieur

Manger sainement est de plus en plus au cœur des préoccupations de la société de consommation. Cependant, outre le manque de temps et d'informations sur les températures de cuisson d'un aliment à dispositif des consommateurs, les articles culinaires actuels ne permettent pas d'atteindre cet objectif. Les cuissons sont souvent trop excessives et dégradent, voire brûlent les aliments qui dégagent des molécules et composés volatils pouvant être nocifs.

On connaît divers articles culinaires comprenant un moyen de détection de composés volatils. De tels articles comprennent une structure comprenant deux faces opposées, et un moyen de détection de composés volatils pouvant être relié à un dispositif de traitement apte à émettre un signal s'il y a une détection desdits composés volatils par ledit moyen de détection.

Ainsi, US 2008/0264269 décrit un appareil de cuisson destiné aux cantines et grandes cuisines et qui comprend un réseau de capteurs ou détecteurs de gaz situé par exemple dans la chambre de cuisson. Cependant, ces détecteurs de gaz sont disposés sur des puces de silicium qui sont appliquées sur l'article et le flux de gaz issu de la chambre de cuisson est amené vers le ou les détecteur (s) via des conduites : une telle disposition ne permet pas une détection fiable et une proximité des composés volatils avec le détecteur. D'autre part, la température de ce genre d'appareil pour des cuissons vapeur ne dépasse rarement une température de 100°C, ce qui peut engendrer un risque de dégradation du moyen de détection à une telle température. Un tel agencement sur une poêle par exemple peut endommager la puce. En effet, la température sur celle-ci peut atteindre des températures jusqu'à 250°C, voire même 280°C. Le document US 7 923 664 B2 montre un autre exemple d'article culinaire avec dispositif de détection de composants volatils issus de la cuisson d'un aliment.

### 3. Objectifs de l'invention

L'invention a notamment pour objectif de pallier tout ou partie des inconvénients de l'art antérieur.

Plus précisément, un objectif de l'invention est de fournir un article culinaire permettant de maîtriser efficacement la cuisson d'un aliment en détectant les composés volatils issus de leurs cuissons donnant une indication sur la dégradation ou la transformation de ceux-ci.

Un autre objectif de la présente invention est de fournir un article de cuisson permettant de conserver les qualités nutritionnelles et organoleptiques d'un aliment.

### 4. Résumé de l'invention

Selon l'invention, ces objectifs sont atteints grâce à un article culinaire incluant une structure présentant une première et une deuxième faces opposées l'une à l'autre, et au moins un moyen de détection de composés volatils issus de la cuisson d'un aliment relié à un dispositif de traitement apte à émettre un signal s'il y a une détection desdits composés volatils par le moyen de détection, ledit moyen de détection étant intégré au moins à la première face, le moyen de détection comprenant un matériau actif, ledit matériau actif étant apte à modifier ses propriétés de conduction électrique en présence des composés volatils et étant un semi-conducteur dopé P ou N ou un matériau de type résistif,
caractérisé en ce que la première face est revêtue d'une couche de revêtement antiadhésif et en ce que le moyen de détection est inclus dans l'épaisseur du revêtement.

Ainsi, le détecteur de composés volatils est situé au plus proche des composés volatils de sorte qu'une information fiable sur l'état de cuisson des aliments est transmise au dispositif de traitement pour en informer un utilisateur.

Le moyen de détection comprend un matériau actif, qui peut être un semi-conducteur dopé P ou N ou un matériau de type résistif.

La première face peut être avantageusement agencée pour être au contact ou en regard d'un aliment, ce qui permet de détecter de manière précoce les composés volatils indiquant que la cuisson est mal maîtrisée.

Mais, il est également possible que la première face soit la face opposée à la face qui est au contact ou en regard d'un aliment. Dans ce cas, les zones d'implantation préférées du moyen de détection sont la partie haute de l'article pour un article creux (casserole, poêle, sauteuse, etc.), et la périphérie ou à proximité d'un point d'évent pour un article de type couvercle.

La première face de l'article culinaire est revêtue d'une couche de revêtement antiadhésif. Cette couche de revêtement antiadhésif peut être à base de matériau sol-gel, ou de résine fluorocarbonée formant un réseau continu fritté, ou de résine silicone, ou en émail. La couche de revêtement antiadhésif peut comprendre, outre le constituant principal cité ci-dessus (en l'occurrence matériau sol-gel, résine fluorocarbonée, résine silicone, ou émail), des charges et/ou des pigments, et/ou d'autres polymères ou matériaux thermostables, et/ou des additifs de mise en œuvre.

Outre des caractéristiques spécifiques au revêtement telles que l'antiadhésivité, la facilité de nettoyage, la résistance à la rayure ou la résistance à la corrosion, le moyen de détection est inclus dans l'épaisseur du revêtement, ce qui évite une saillie toujours susceptible d'être plus facilement endommagée.

Ledit moyen de détection comprend un matériau actif apte à modifier ses propriétés de conduction électrique en présence des composés volatils.

Selon un mode de réalisation particulièrement avantageux de l'article selon l'invention, ledit moyen de détection comprend :
- au moins deux éléments de connexion assurant la connexion entre le matériau actif et le dispositif de traitement.

Le matériau actif est celui qui, par la modification d'au moins une de ses propriétés (notamment la conduction) permettra la détection des composés volatils.

Les éléments de connexion peuvent avantageusement être des électrodes, aptes à acheminer le signal électrique ainsi obtenu vers le dispositif de traitement. Deux éléments de connexion sont nécessaires pour rendre le dispositif effectif.

Dans un tel mode de réalisation de l'article selon l'invention, le moyen de détection et le dispositif de traitement peuvent avantageusement former un circuit électrique où le matériau actif présente une résistivité variant en présence des composés volatils et, si un courant électrique traversant le dispositif de traitement est différent d'un seuil prédéterminé, le dispositif de traitement émet un signal.

Une telle disposition du matériau actif travaillant en mode résistif permet de réaliser facilement un moyen de détection en coopération avec le dispositif de traitement.

De manière avantageuse, les éléments de connexion électriques et le matériau actif sont disposés sur la première face. Cet agencement permet au moyen de détection d'être directement situé sous le flux de composés volatils.

Selon un deuxième mode de réalisation particulièrement avantageux de la présente invention, ledit moyen de détection comprend un transistor à effet de champ dont le canal est constitué d'un matériau actif apte à modifier ses propriétés de conduction électrique en présence des composés volatils.

L'agencement du matériau actif et du moyen de détection tel un transistor a pour avantage d'avoir un asservissement plus fin.

Selon ce deuxième mode de réalisation, le matériau actif peut être configuré pour permettre le décalage d'une tension de seuil du transistor à tension de grille constante. En décalant la tension de seuil de la sorte, il est possible de modifier l'état de fonctionnement du matériau actif en présence ou non des composés volatils.

L'état du matériau actif peut être de préférence soit non passant en absence de composés volatils ou soit conducteur en présence de composés volatils et inversement.

Préférentiellement, le transistor à effet de champ peut être composé d'un empilement de couches qui selon un axe, comprend :
- une couche conductrice formant une électrode de grille ;
- une couche électriquement isolante formant une grille ;
- une couche formant le matériau actif ; et
- au moins deux couches formant respectivement deux électrodes de drain et de source.

Selon encore une disposition avantageuse, le moyen de détection peut comprendre une membrane de protection apte à laisser passer vers le matériau actif des molécules composant les composés volatils.

Pour une meilleure adhésion du moyen de détection sur l'article culinaire, on peut prévoir la formation d'une couche d'accroche disposée entre la première face, revêtue d'un revêtement antiadhésif, et les éléments de connexion électriques et le matériau actif, ou l'électrode de grille, la couche d'accroche étant nécessairement électriquement isolante lorsque, selon une variante qui ne fait pas partie de l'invention, la première face n'est pas revêtue d'un revêtement antiadhésif.

Selon un mode de réalisation particulièrement avantageux de la présente invention, les éléments de connexion et/ou le matériau actif et/ou les électrodes de grille ou de drain ou de source et/ou la grille peuvent comprendre :
- des substances électro-conductrices qui peuvent être avantageusement choisies dans le groupe comprenant des poudres de charges métalliques et/ou minérales, de la poudre de graphite de carbone, du graphène et des nanotubes de carbone ; ou
- des polymères conducteurs ou semi-conducteurs ; ou
- des oxydes métalliques semi-conducteurs ; ou
- des nanotubes de carbone ; ou
- des nanofils de silicium.

A titre d'exemple d'éléments de connexion, on peut notamment citer les électrodes linéaires ou à peignes interdigités.

Dans les différents modes de réalisation, l'article culinaire peut avantageusement comprendre un moyen d'alerte sonore ou visuel relié aux éléments de connexion via le dispositif de traitement pour prévenir un utilisateur sur l'état d'avancement de la cuisson des aliments et/ou de leurs transformations et/ou dégradations.

De manière avantageuse, le détecteur de composés volatils et la couche de revêtement présentent ensemble une épaisseur comprise entre 5 µm et 50 µm.

On peut envisager différents types d'articles conformes à l'invention, de différentes formes et réalisés dans différents matériaux. Ainsi, il peut s'agir d'un article dont la structure peut être en un matériau choisi parmi les métaux, le verre, les céramiques et les matières plastiques.

En particulier, à titre de structures métalliques utilisables dans le cadre de la présente demande on peut citer avantageusement :
- les structures monocouches en aluminium anodisé ou non, ou en aluminium poli, brossé ou microbillé, sablé, traité chimiquement, ou en fonte d'aluminium, ou en acier inoxydable poli, brossé ou microbillé, ou en fonte, ou en tôle aluminiée ou en cuivre martelé ou poli, ou
- les structures multicouches comprenant de l'extérieur vers l'intérieur les couches suivantes acier inoxydable ferritique / aluminium/acier inoxydable austénitique ou encore acier inoxydable / aluminium / cuivre / aluminium /acier inoxydable austénitique, ou encore une calotte d'aluminium de fonderie, d'aluminium ou d'alliages d'aluminium doublée d'un fond extérieur en acier inoxydable.

A titre d'exemples non limitatifs d'articles conformes à la présente invention, on peut notamment citer un couvercle destiné à être disposé à proximité et directement sous le flux des composés volatils ou une calotte présentant un fond d'où s'élève une paroi latérale : les aliments étant disposés dans la calotte, cela permet de mettre en contact direct ou indirect le moyen de détection et les composés volatils. Le moyen de détection peut être situé de préférence sur une partie au moins de la paroi latérale de l'article.

L'invention concerne encore un ensemble pour la cuisson d'un aliment comprenant un couvercle et une calotte de cuisson dont l'un au moins est l'article culinaire tel que susmentionné. Selon cet ensemble, le couvercle et la calotte de cuisson sont adaptés pour que le couvercle couvre une ouverture de la calotte de telle sorte que soit alors délimité un espace de cuisson où le moyen de détection est en contact avec les composés volatils.

Ainsi, le moyen de détection est toujours disposé à proximité et directement sous le flux des composés volatils de sorte qu'il puisse apporter des informations précises sur le déroulement de la cuisson.

Avantageusement, le dispositif de traitement et/ou le moyen d'alerte peuvent être situés sur une poignée ou un bouton lié(e), de manière permanente ou non, à la calotte de cuisson ou au couvercle.

L'invention concerne encore un système comprenant l'article culinaire ou l'ensemble tel que décrit précédemment et un dispositif de chauffage de l'article culinaire et/ou d'un aliment disposé dans ledit article, le dispositif de chauffage et/ou l'article culinaire comprenant des moyens de contrôle recevant un signal issu du dispositif de traitement pour une adaptation d'une durée de chauffage, et/ou d'une température de l'article culinaire et/ou de l'aliment, en fonction dudit signal émis.

Ainsi, une fois que les composés volatils sont détectés par le moyen de détection coopérant avec le dispositif de traitement, celui-ci peut générer un signal vers le moyen de contrôle pour agir sur la source de chaleur, de sorte à réduire le chauffage sous l'article culinaire et ainsi ralentir la dégradation et/ou transformation de l'aliment.

Selon un mode de réalisation particulier et avantageux du système selon l'invention, le dispositif de chauffage comprend une plaque de cuisson sur laquelle repose l'article culinaire, le dispositif de chauffage étant l'un au moins parmi :
- un brûleur à gaz relié à une source de gaz combustible ;
- une résistance chauffante ; et,
- des moyens de chauffage par induction, la structure de l'article culinaire étant alors pourvue de matériaux ferromagnétiques configurés pour transformer en chaleur un champ magnétique provenant desdits moyens de chauffage.

La présente invention a encore pour objet un procédé de réalisation d'un article culinaire tel que décrit précédemment comprenant les étapes suivantes :
- fourniture d'une structure d'article ayant une première face et une deuxième face opposée ;
- application d'une substance électro-conductrice comprenant une ou plusieurs charges électro-conductrices ;
- application d'un matériau actif sensible à des composés volatils issus de la cuisson d'un aliment.

Selon un mode particulièrement avantageux de mise en œuvre du procédé selon l'invention, les étapes suivantes sont réalisées entre l'étape d'application d'une structure d'article et l'étape d'application d'une substance électro-conductrice :
- formation d'une première couche d'accroche ;
- formation d'une couche de revêtement antiadhésif ; et,
- formation d'une deuxième couche d'accroche.

De préférence, l'étape de formation des première et deuxième couches d'accroche peuvent consister en un traitement de surface chimique, mécanique, ou physicochimique de la première face ou du revêtement antiadhésif.

Dans ce premier mode de réalisation du procédé, l'étape de formation d'une couche de revêtement antiadhésif peut avantageusement comprendre l'application d'une couche de revêtement antiadhésif de composition sol-gel à base d'un polyalcoxylate métallique, suivie d'une densification consistant en un traitement thermique à une température comprise entre 100°C et 400°C.

L'étape de formation d'une couche de revêtement antiadhésif peut aussi être réalisée par l'application d'une couche revêtement antiadhésif de composition à base de résine fluorocarbonée, suivie d'une densification consistant en un traitement thermique à une température comprise entre 350°C à 450°C.

En particulier, l'étape d'application d'une substance électro-conductrice est un dépôt sur tout ou partie de la première face de la structure pour former des éléments de connexion.

### 5. Liste des figures

D'autres caractéristiques et avantages innovants ressortiront de la description ci-après, fournie à titre indicatif et nullement limitatif, en référence aux dessins annexés, dans lesquels :
- la figure 1 est une vue en perspective d'un article culinaire selon un mode de réalisation de l'invention,
- la figure 2 est une vue en perspective d'un article culinaire selon un autre mode de réalisation de l'invention,
- la figure 3 est une vue en coupe d'un ensemble comprenant deux articles culinaires dont l'un au moins selon un mode de réalisation de l'invention,

- la figure 4 est une représentation schématique d'un moyen de détection selon un premier exemple qui ne fait pas partie de l'invention mais qui est utile à la compréhension de l'invention,
- la figure 5 illustre également un moyen de détection, mais selon un deuxième exemple qui ne fait pas partie de l'invention mais qui est utile à la compréhension de l'invention,
- la figure 6 représente schématiquement une courbe de tension du moyen de détection et du dispositif de traitement,
- la figure 7 représente schématiquement une variante d'une courbe de tension du moyen de détection et du dispositif de traitement,
- la figure 8 est une vue schématique et partielle d'un système selon un mode de réalisation de l'invention,
- la figure 9 est un schéma de principe du dispositif de traitement et du moyen de détection.

### 6. Description détaillée

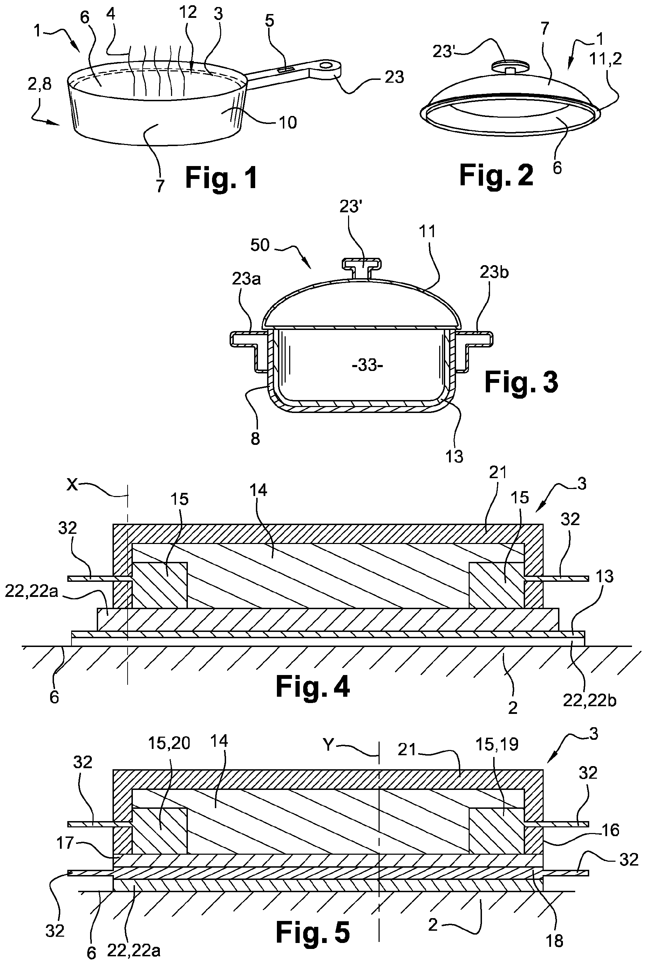

Sur les figures 1 à 3, et 8 sont représentés des exemples d'articles culinaires du genre poêles, casseroles, couvercles, etc. Ces derniers peuvent être compatibles avec tout type de chauffage (gaz, induction, électrique). Les articles culinaires sont en contact direct ou indirect avec des aliments aptes à générer des composés volatils.

L'article culinaire 1 comprend une structure 2 ou support, un moyen de détection 3 de composés volatils 4 et un dispositif de traitement 5.

La structure 2 présente une première 6 et une deuxième 7 faces opposées l'une à l'autre. La première face 6 est destinée à être en contact ou en regard d'un aliment en vue de sa cuisson tandis que la deuxième face 7 est destinée à être en relation avec l'environnement externe (milieu ambiant) ou à reposer sur un dispositif de chauffage 24 décrit plus loin dans la présente description.

Le moyen de détection 3 de composés volatils 4 est relié au dispositif de traitement 5, lequel est apte à émettre un signal s'il y a une détection des composés volatils 4. Le moyen de détection 3 décrit dans les présents modes de réalisation est sensible à des composés volatils issus des arômes d'un aliment et/ou d'une transformation de l'aliment lors de sa cuisson et/ou de sa dégradation thermique. En particulier, les composés volatils sont par exemple des molécules d'hydrocarbures aromatiques polyinsaturés, d'acrylamides ou acroléines.

Selon un mode de réalisation illustré sur la figure 1, la structure 2 de l'article culinaire 1 définit une calotte de cuisson 8 qui présente un fond 9 et une paroi latérale 10 s'élevant en périphérie du fond 9. La calotte 8 comprend également l'ouverture 12 délimitée par la paroi latérale 10 et permettant de placer le ou les aliment(s) dans la calotte 8.

Sur la figure 2, est illustré un autre mode de réalisation, dans lequel la structure 2 de l'article culinaire 1 définit un couvercle 11. Ce dernier est avantageusement destiné à couvrir une ouverture 12 de la calotte de cuisson 8 telle que décrit ci-dessus.

Les figures 1 et 3 montrent qu'une ou deux poignée(s) 23a, 23b (une poignée sur la figure 1 et deux poignées sur la figure 3), sont fixée(s) sur l'article culinaire 1, par exemple sur la paroi latérale 10 de la calotte 8 (seul ou disposée symétriquement) pour la préhension de l'article 1.

La figure 2 montre qu'un bouton 23' est fixé sur la partie supérieure du couvercle 11 pour la préhension de l'article 1.

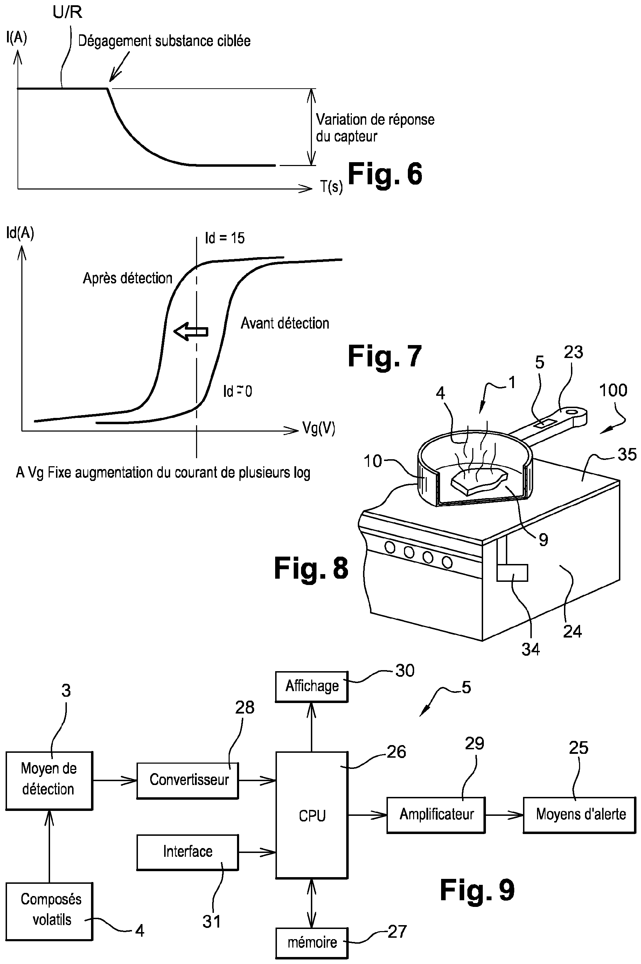

Le dispositif de traitement 5 (figure 9) est équipé d'un élément électronique, par exemple, une puce électronique 26 (CPU) ou un circuit intégré pour traiter des informations provenant du moyen de détection 3. La puce électronique 26 de manière connue est pourvue d'une mémoire 27, d'un circuit électrique, ainsi que d'un convertisseur 28 analogique/numérique et/ou un amplificateur 29 pour amplifier et numériser les informations en provenance du moyen de détection 3 de composés volatils 4. La puce 26 comporte une connexion vers un moyen d'alerte 25 décrit ci-après. Le dispositif de traitement 5 est ménagé dans la poignée 23 ou le bouton 23'. Cette dernière peut être amovible. Le dispositif de traitement 5 comporte également des moyens d'affichage 30 et/ou une interface 31 pour opérer des commandes (activation ou désactivation du dispositif de traitement 5 par exemple).

Le moyen de détection 3 est intégré au moins à la première face 6 de la structure 2 de l'article 1. De la sorte, le moyen de détection 3 est placé sous le flux de composés volatils 4, lequel apporte des informations sur le déroulement de la cuisson.

On entend par le terme « intégré », dans la présente invention, un moyen de détection 3 assimilé à un « revêtement » de la structure 2 de l'article 1 avec revêtement antiadhésif. Ce « revêtement » peut être prévu sur toute ou partie de la première face 6 de la structure 2 par opposition aux termes « apposé » ou « rapporté ».

La première face 6 peut avantageusement être revêtue d'une couche de revêtement 13 antiadhésif (figure 4) en matériau sol-gel ou en résine fluorocarbonée formant un réseau continu fritté ou en émail pour éviter que l'aliment accroche ou attrape la structure 2. La résine fluorocarbonée peut être avantageusement choisie dans le groupe comprenant les polytétrafluoroéthylènes (PTFE), les copolymères de tétrafluoroéthylène et de perfluoropropylvinyléther (PFA), les copolymères de tétrafluoroéthylène et d'hexafluoropropène (FEP), les polyfluorures de vinylidène (PVDF), le MVA (copolymère de TFE/PMVE), les terpolymères TFE/PMVE/FAVE, l'ETFE, et leurs mélanges.

On utilisera de préférence à titre de résine fluorocarbonée le polytétrafluoroéthylène (PTFE), ou un mélange (PTFE/PFA) de polytétrafluoroéthylène (PTFE) et de copolymère de tétrafluoroéthylène et de perfluoropropylvinyléther (PFA), ou un mélange (PTFE/FEP) de polytétrafluoroéthylène (PTFE) et de copolymère de tétrafluoroéthylène et d'hexafluoropropène (FEP). Le matériau sol-gel peut comprendre une matrice d'au moins un polyalcoxylate métallique, qui est de préférence constitué par un polyalcoxysilane.

Selon un exemple illustré sur la figure 4, le moyen de détection 3 comprend un matériau actif 14 apte à modifier ses propriétés de conduction électrique en présence des composés volatils 4 et au moins deux éléments de connexion 15 assurant la connexion entre le matériau actif 14 et le dispositif de traitement 5. Dans cet exemple, le matériau actif 14 agit comme une résistance. Pour ce faire, le moyen de détection 3 et le dispositif de traitement 5 sont agencés sur la structure 2 de manière à former un circuit électrique où le matériau actif 14 présente une résistivité variant en présence des composés volatils 4.

Tel que représenté schématiquement sur les figures 4 et 6, le moyen de détection 3 génère une tension U constante aux bornes des éléments de connexion 15 et mesure la variation de l'intensité I du courant passant dans le matériau actif 14, la variation du courant étant liée à la variation de la résistivité.

Par exemple, pour une tension de 1V appliquée aux bornes du moyen de détection 3, la réponse en intensité peut être comprise entre 5 et 20 mA. Lors de l'exposition aux substances actives, la réponse en intensité du dispositif varie du fait de la variation de résistance du matériau actif 14. Lorsque cette variation d'intensité mesurée est au moins le double de l'intensité initiale sans substance active, le dispositif de traitement 5 émet un signal via le moyen d'alerte 25 sonore ou visuel pour avertir l'utilisateur de la transformation et dégradation de l'aliment.

Les éléments de connexion 15 électriques et le matériau actif 14 sont disposés sur la première face 6. De préférence, ils sont situés au-dessus de la couche de revêtement 13 antiadhésif.

Le moyen de détection 3 est composé d'un empilement de couches agencées sur la première face 6 qui selon un axe X comprend une couche formant le matériau actif 14 et au moins deux couches formant les éléments de connexion 15. Ces derniers peuvent être montés de manière adjacente au matériau actif 14. Ils peuvent également être constitués de deux électrodes linéaires ou à peignes interdigités. Les électrodes peuvent être en contact chacune avec le matériau actif 14 et présenter une piste conductrice 32 pour la connexion au dispositif de traitement 5 et/ou au moyen d'alerte 25.

Selon un autre exemple illustré sur la figure 5, le moyen de détection 3 présente un effet transistor, c'est-à-dire, agit comme un amplificateur d'un courant électrique. Plus précisément, le moyen de détection 3 comprend un transistor 16 à effet de champ « ou « *Field Effect Transistor* » (FET) en anglais), dont le canal est constitué d'un matériau actif 14 apte à modifier ses propriétés de conduction électrique en présence des composés volatils. Dans cet exemple, le moyen de détection 3 comprend au moins : le matériau actif 14, une grille 17, une électrode de grille 18, une électrode de drain 19 et une électrode de source 20.

Le matériau actif 14 permet, lors d'une exposition à une substance active, le décalage d'une tension de seuil du transistor 16 à tension de grille constante V_{g} (voir figure 7). Par exemple, pour une tension de grille Vg bien choisie (généralement comprise entre -5 et +5V), le matériau actif 14 présente un état non passant en absence de composés volatils. Le courant électrique I_{d} ne circule pas dans le dispositif de traitement 5 et il n'y a donc pas de signal émis par le dispositif de traitement 5. Lors de l'exposition aux matières actives, la tension de seuil est décalée (ici vers la gauche) et le transistor est en mode passant. Le courant Id mesuré est amplifié d'un facteur logarithmique allant de 1 à 5.

Dans le cas du matériau conducteur, un signal est généré par le dispositif de traitement 5 pour signaler la transformation de l'aliment.

Le matériau actif 14 peut être un semi-conducteur dopé P ou N.

Selon cet exemple ci-dessus, le transistor FET est composé d'un empilement de couches qui selon un axe Y, comprend :
- une couche conductrice formant respectivement l'électrode de grille 18 ;
- une couche isolante formant la grille 17 ;
- une couche formant le matériau actif 14 ; et
- au moins deux couches formant une électrode de drain 19 et de source 20.

L'article culinaire peut comporter plusieurs moyens de détection 3 de composés volatils 4 ou matériaux actifs 14 sensibles chacun à un seul constituant ou molécule des composés volatils.

Le moyen de détection 3 peut comprendre une membrane de protection 21 apte à laisser passer vers le matériau actif 14 des molécules composant les composés volatils. La membrane de protection 21 peut présenter une perméabilité sélective, ce qui permet d'affiner la spécificité de la détection. Le film constituant la membrane 21 présente des lacunes dans le réseau constitutif déterminées pour laisser passer sélectivement un ou plusieurs composés spécifiques.

Pour favoriser l'adhérence du moyen de détection 3 sur la structure 2, celui-ci comprend en outre une couche d'accroche 22. Une première couche d'accroche 22a peut être disposée entre la première face 6 nue et les éléments de connexion 15 et/ou le matériau actif 14 ou l'électrode de grille 18 (figure 5). Elle peut être encore disposée entre une couche de revêtement 13 antiadhésif et les éléments de connexion 15 électriques et/ou le matériau actif 14, ou l'électrode de grille 18.

De manière connue, une deuxième couche d'accroche 22b est également prévue entre la première face 6 nue de la structure 2 et le revêtement 13 (figure 4). La ou les couche(s) d'accroche 22a, 22b est/sont obtenue(s) par un traitement de surface chimique, mécanique (par exemple sablage), ou physicochimique de la première face ou du revêtement antiadhésif.

Avantageusement, le moyen de détection 3 de composés volatils et la couche de revêtement 13 antiadhésif présentent ensemble une épaisseur comprise entre 5 µm et 50 µm. Le moyen de détection 3 de composés volatils présente une épaisseur comprise entre 5 µm et 30 µm. Sur la figure 1, le moyen de détection 3 est situé sur une partie au moins de la paroi latérale 10 de l'article culinaire 1 : il se présente sur cette figure sous forme d'une bande intégrée à la première face 6 de la paroi latérale 10 (jupe) de la calotte 8 et en partie supérieure de la paroi 10. Le moyen de détection 3 sous forme de bande peut également être prévu sur la première face du couvercle 11.

L'article culinaire 1 tel que décrit précédemment comprend encore un moyen d'alerte 25 sonore ou visuel relié aux éléments de connexion 15 via le dispositif de traitement 5. Le moyen d'alerte 25 est de préférence monté dans le dispositif de traitement 5.

Les éléments de connexion 15 et/ou le matériau actif 14 et/ou les électrodes de grille 18 ou de drain 19 ou de source 20 et/ou de la grille comprennent :
- des substances électro-conductrices qui sont choisies dans le groupe comprenant :
   ∘ des poudres de charges métalliques et/ou minérales ;
   ∘ de la poudre de graphite de carbone ; et,
   ∘ des nanotubes de carbone ; ou
- des polymères conducteurs ou semi-conducteurs ; ou
- des oxydes métalliques semi-conducteurs ; ou
- des nanotubes de carbone ; ou
- des nanofils de silicium.

La structure 2 de l'article culinaire 1 est avantageusement une structure métallique monocouche en aluminium anodisé ou non, ou en aluminium poli, brossé ou microbillé, sablé, traité chimiquement, ou en acier inoxydable poli, brossé ou microbillé, en fonte ou en cuivre martelé ou poli.

L'invention concerne également un ensemble 50 pour la cuisson d'un aliment tel que représenté sur la figure 3. L'ensemble 50 comprend un couvercle 11 et une calotte de cuisson 8. La calotte 8 et/ou le couvercle 11 peu(ven)t présenter les caractéristiques de l'article culinaire 1 décrit à la revendication 1, et comprendre notamment le moyen de détection 3 de composés volatils. Selon cet ensemble 50, le couvercle 11 et la calotte 8 sont adaptés pour que le couvercle 11 couvre une ouverture 12 de la calotte 8 de tel sorte que soit alors délimité un espace 33 ou chambre de cuisson où le moyen de détection 3 est en contact avec les composés volatils générés par la cuisson d'un aliment. Ainsi, même dans un espace 33 fermé (par le couvercle 11), un utilisateur peut être informé de l'état d'avancement de la cuisson de l'aliment.

Selon cet ensemble 50, le dispositif de traitement 5 et/ou le moyen d'alerte 25 sont situés sur une poignée 23, 23a, 23b, ou un bouton 23' liés à la calotte de cuisson 8 (en particulier sur la paroi latérale 10) ou au couvercle 11.

L'invention se rapporte encore à un système 100 comprenant un article culinaire 1 (couvercle 11 ou calotte de cuisson 8) ou un ensemble 50 (couvercle 11 et calotte de cuisson 8) tel que décrit précédemment. Ce système 100 comprend également un dispositif de chauffage 24 destiné à chauffer l'article culinaire 1 et/ou l'aliment disposé dans celui-ci.

Le dispositif de chauffage 24 peut comprendre une plaque de cuisson 35 sur laquelle repose l'article culinaire 1. Le dispositif de chauffage 24 peut être un brûleur à gaz relié à une source de gaz combustible, une résistance chauffante, ou des moyens de chauffage par induction. Bien entendu, le dispositif de chauffage 24 peut combiner les différentes sources de chauffage.

Pour que l'article culinaire 1, en l'occurrence la calotte 8, soit compatible avec une plaque de cuisson 35 de type induction, la structure 2 de l'article culinaire 1 est pourvu de matériaux ferromagnétiques configurés pour transformer en chaleur un champ magnétique provenant des moyens de chauffage par induction.

Selon un mode de réalisation du système 100, ce dernier comporte un moyen de contrôle 34 qui est monté dans le dispositif de chauffage 24 (ici celui-ci comprend une plaque de cuisson 35 par induction) et lequel est destiné à recevoir un signal émis par le dispositif de traitement 5 de l'article 1. Cet agencement permet d'adapter la durée de chauffage et/ou d'une température de l'article culinaire et/ou de l'aliment en fonction du signal émis par ledit dispositif de traitement 5.

Le moyen de contrôle 34 est équipé d'un circuit intégré (non représenté) dans lequel peut être intégré un logiciel pilotant les moyens de chauffe de la plaque de cuisson 35. Le circuit intégré peut être connecté via une liaison sans fil au dispositif de traitement 5. La liaison sans fil peut utiliser les systèmes de marque déposée « Wi-Fi® », infrarouge, etc. De préférence, le système sans fil utilise la configuration Bluetooth® selon les normes IEEE 802.15.1 à IEEE 802.15.4 bien connu.

Selon une variante de ce mode de réalisation, l'article culinaire 1 est équipé du moyen de contrôle 34. Ce dernier est installé de préférence sur au moins une poignée 23 de l'article.

L'invention concerne en outre un procédé de réalisation d'un article culinaire 1 selon l'invention. Le procédé comprend une étape de fourniture d'une structure 2 pour l'article 1, cette structure 2 présentant une première face 6 pouvant être en contact avec des composés volatils 4 issus de la cuisson d'un aliment disposé alors sur ou à proximité de cette première face 6, et une deuxième face 7 opposée à la première 6. La structure 2 peut être en verre, métal, en céramique ou en matière plastique. Pour les structures métalliques on procède à un emboutissage pour donner une forme creuse à une calotte 8 alors comprenant un fond 9 et une paroi latérale 10 ou un couvercle 11. En ce qui concerne les structures 2 à base de verre, on procède à la coulée ou au moulage d'une pâte fondue.

Après ces étapes, on applique une substance électro-conductrice comprenant une ou plusieurs charge(s) électro-conductrice(s) sur la première face 6. Le dépôt peut être réalisé par pulvérisation ou projection, sérigraphie, tampographie, impression jet d'encre ou pleine couche suivi d'une structuration. Le dépôt de la substance électro-conductrice peut être effectué sur tout ou partie de la première face de la structure 2 pour former des éléments de connexion 15.

On applique ensuite un matériau actif 14 sensible à des composés volatils 4 issus de la cuisson d'un aliment, le dépôt étant réalisé comme pour l'étape précédente.

Avant d'appliquer la substance électro-conductrice, il est souhaitable de former une première couche d'accroche 22a qui permettra d'accroître l'adhérence de la première face 6 avec la couche qu'elle est destinée à recevoir (substance électro-conductrice ou matériaux actif 14).

On peut former une couche de revêtement 13 antiadhésif en matériau sol-gel ou à base de résine fluorocarbonée. Dans ce cas, il est également nécessaire de former une deuxième couche d'accroche 22b entre le revêtement 13 antiadhésif et la substance électro-conductrice par exemple.

On procède alors à un traitement de surface chimique, mécanique, ou physicochimique de la première face ou du revêtement 13 antiadhésif pour obtenir la première 22a et la deuxième 22b couche d'accroche.

L'étape de formation de la couche de revêtement 13 antiadhésif peut comprendre l'application d'une couche de revêtement 13 antiadhésif de composition sol-gel à base d'un polyalcoxylate métallique. L'application de cette couche est suivie d'une densification qui consiste en un traitement thermique à une température comprise entre 100°C et 400°C.

En variante, l'étape de formation d'une couche de revêtement antiadhésif 13 peut comprendre l'application d'une couche de revêtement antiadhésif de composition à base de résine fluorocarbonée. L'application de cette couche est également suivie d'une densification consistant en un traitement thermique à une température comprise entre 350°C à 450°C.

## Revendications

1. Article culinaire (1) incluant :
- une structure (2) présentant une première (6) et une deuxième (7) faces opposées l'une à l'autre, et
- au moins un moyen de détection (3) de composés volatils issus de la cuisson d'un aliment (4) relié à un dispositif de traitement (5) apte à émettre un signal s'il y a une détection desdits composés volatils (4) par le moyen de détection (3), ledit moyen de détection (3) étant intégré au moins à la première face (6),
le moyen de détection (3) comprenant un matériau actif, ledit matériau actif (14) étant apte à modifier ses propriétés de conduction électrique en présence des composés volatils (4) et étant un semi-conducteur dopé P ou N ou un matériau de type résistif,
**caractérisé en ce que** la première face (6) est revêtue d'une couche de revêtement antiadhésif (13) et **en ce que** le moyen de détection (3) est inclus dans l'épaisseur du revêtement.

2. Article culinaire (1) selon la revendication 1, **caractérisé en ce que** la première face (6) est agencée pour être au contact ou en regard d'un aliment.

3. Article culinaire (1) selon l'une quelconque des revendications 1 à 2, **caractérisé en ce que** le revêtement antiadhésif (13) est à base de matériau sol-gel, ou en résine fluorocarbonée formant un réseau continu fritté, ou en résine silicone, ou en émail.

4. Article culinaire (1) selon l'une des revendications 1 à 3, **caractérisé en ce que** ledit moyen de détection (3) comprend en outre au moins deux éléments de connexion (15) assurant la connexion entre le matériau actif (14) et le dispositif de traitement (5).

5. Article culinaire (1) selon la revendication 4, **caractérisé en ce que** le moyen de détection (3) et le dispositif de traitement (5) forment un circuit électrique où le matériau actif (14) présente une résistivité variant en présence des composés volatils (4) et, si un courant électrique traversant le dispositif de traitement (5) est différent d'un seuil prédéterminé, le dispositif de traitement (5) émet un signal.

6. Article culinaire (1) selon l'une des revendications 1 à 3, **caractérisé en ce que** ledit moyen de détection (3) comprend un transistor (16) à effet de champ dont le canal est constitué d'un matériau actif (14) apte à modifier ses propriétés de conduction électrique en présence des composés volatils (4).

7. Article culinaire (1) selon la revendication 6, **caractérisé en ce que** le matériau actif (14) est configuré pour permettre le décalage d'une tension de seuil du transistor (16) à tension de grille constante.

8. Article culinaire (1) selon la revendication 7, **caractérisé en ce que** le matériau actif (14) présente au moins deux états : un état non passant en absence de composés volatils ; et
- un état conducteur en présence de composés volatils et inversement.

9. Article culinaire (1) selon la revendication 4, **caractérisé en ce qu'**il comprend un moyen d'alerte (25) sonore ou visuel relié aux éléments de connexion (15) via le dispositif de traitement (5).

10. Ensemble (50) pour la cuisson d'un aliment comprenant un couvercle (11) et une calotte de cuisson (8) dont l'un au moins est l'article culinaire (1) selon l'une des revendications précédentes, **caractérisé en ce que** le couvercle (11) et la calotte de cuisson (8) sont adaptés pour que le couvercle (11) couvre une ouverture (12) de la calotte (8) de telle sorte que soit alors délimité un espace de cuisson où le moyen de détection (3) est en contact avec les composés volatils (4).

11. Système (100) comprenant l'article culinaire (1) selon l'une quelconque des revendications 1 à 9 ou l'ensemble (50) selon la revendication 10 et un dispositif de chauffage (24) de l'article culinaire (1) et/ou d'un aliment disposé dans ledit article (1), le dispositif de chauffage (24) et/ou l'article culinaire (1) comprenant des moyens de contrôle recevant un signal issu du dispositif de traitement (5) pour une adaptation d'une durée de chauffage et/ou d'une température de l'article culinaire (1) et/ou de l'aliment, en fonction du signal émis.

12. Procédé de réalisation d'un article culinaire (1) selon l'une des revendications précédentes comprenant les étapes suivantes :
- fourniture d'une structure (2) d'article (1) ayant une première face (6) et une deuxième (7) face opposée ;
- application d'une substance électro-conductrice comprenant une ou plusieurs charge(s) électro-conductrice(s) ;
- application d'un matériau actif (14) sensible à des composés volatils (4) issus de la cuisson d'un aliment.

## Patentansprüche

1. Kochgeschirr (1), das beinhaltet:
- eine Struktur (2), die eine erste (6) und eine zweite (7) Fläche, die einander gegenüberliegen, aufweist, und
- mindestens ein Erfassungsmittel (3) flüchtiger Verbindungen, die aus dem Garen eines Nahrungsmittels (4) hervorgehen, das mit einer Verarbeitungsvorrichtung (5) verbunden ist, die dazu geeignet ist, ein Signal abzugeben, falls eine Erfassung der flüchtigen Verbindungen (4) durch das Erfassungsmittel (3) auftritt, wobei das Erfassungsmittel (3) mindestens in die erste Fläche (6) integriert ist,
wobei das Erfassungsmittel (3) ein aktives Material umfasst, wobei das aktive Material (14) dazu geeignet ist, seine elektrischen Leitungseigenschaften bei Anwesenheit der flüchtigen Verbindungen (4) zu ändern, und ein Halbleiter, der P- oder N-dotiert ist oder ein Material vom resistiven Typ ist,
**dadurch gekennzeichnet, dass** die erste Fläche (6) mit einer Klebeschutzüberzugsschicht (13) überzogen ist, und dass das Erfassungsmittel (3) in der Stärke des Überzugs enthalten ist.

2. Kochgeschirr (1) nach Anspruch 1, **dadurch gekennzeichnet, dass** die erste Fläche (6) eingerichtet ist, um mit einem Nahrungsmittel in Kontakt zu sein oder ihm gegenüberzuliegen.

3. Kochgeschirr (1) nach einem der Ansprüche 1 bis 2, **dadurch gekennzeichnet, dass** der Klebeschutzüberzug (13) auf Sol-Gel-Material beruht oder aus Fluorkohlenstoffharz, das ein kontinuierliches gesintertes Netzwerk bildet, oder aus Silikonharz oder aus Email besteht.

4. Kochgeschirr (1) nach einem der Ansprüche 1 bis 3, **dadurch gekennzeichnet, dass** das Erfassungsmittel (3) außerdem zwei Verbindungselemente (15) umfasst, die die Verbindung zwischen dem aktiven Material (14) und der Verarbeitungsvorrichtung (5) sicherstellen.

5. Kochgeschirr (1) nach Anspruch 4, **dadurch gekennzeichnet, dass** das Erfassungsmittel (3) und die Verarbeitungsvorrichtung (5) eine elektrische Schaltung bilden, in der das aktive Material (14) einen spezifischen Widerstand aufweist, der bei Anwesenheit der flüchtigen Verbindungen (4) variiert, und, falls ein elektrischer Strom, der die Verarbeitungsvorrichtung (5) durchquert, von einem vorbestimmten Schwellenwert unterschiedlich ist, die Verarbeitungsvorrichtung (5) ein Signal ausgibt.

6. Kochgeschirr (1) nach einem der Ansprüche 1 bis 3, **dadurch gekennzeichnet, dass** das Erfassungsmittel (3) einen Feldeffekttransistor (16) umfasst, dessen Kanal aus einem aktiven Material (14) besteht, das dazu geeignet ist, seine elektrischen Leitungseigenschaft bei Anwesenheit der flüchtigen Verbindungen (4) zu ändern.

7. Kochgeschirr (1) nach Anspruch 6, **dadurch gekennzeichnet, dass** das aktive Material (14) konfiguriert ist, um die Verlagerung einer Schwellenspannung des Transistors (16) zu einer konstanten Gate-Spannung zu erlauben.

8. Kochgeschirr (1) nach Anspruch 7, **dadurch gekennzeichnet, dass** das aktive Material (14) mindestens zwei Zustände aufweist:
- einen nichtdurchlässigen Zustand bei Abwesenheit flüchtiger Verbindungen; und
- einen leitenden Zustand bei Anwesenheit flüchtiger Verbindungen und umgekehrt.

9. Kochgeschirr (1) nach Anspruch 4, **dadurch gekennzeichnet, dass** es ein akustisches oder visuelles Warnmittel (25), das mit den Verbindungselementen (15) über die Verarbeitungsvorrichtung (5) verbunden ist, umfasst.

10. Einheit (50) für das Garen eines Nahrungsmittels, die einen Deckel (11) und eine Garhaube (8) umfasst, von welchen mindestens einer das Kochgeschirr (1) nach einem der vorstehenden Ansprüche ist, **dadurch gekennzeichnet, dass** der Deckel (11) und die Garhaube (8) dazu angepasst sind, dass der Deckel (11) eine Öffnung (12) der Garhaube (8) derart abdeckt, dass ein Garraum abgegrenzt ist, in dem das Erfassungsmittel (3) mit den flüchtigen Verbindungen (4) in Kontakt ist.

11. System (100), das das Kochgeschirr (1) nach einem der Ansprüche 1 bis 9 oder die Einheit (50) nach Anspruch 10 sowie eine Heizvorrichtung (24) des Kochgeschirrs (1) und/oder ein Nahrungsmittel, das in dem Geschirr (1) angeordnet ist, umfasst, wobei die Heizvorrichtung (24) und/oder das Kochgeschirr (1) Steuermittel umfassen, die ein Signal, das aus der Verarbeitungsvorrichtung (5) hervorgeht, für eine Anpassung einer Heizdauer und/oder einer Temperatur des Kochgeschirrs (1) und/oder des Nahrungsmittels in Abhängigkeit von dem abgegebenen Signal empfangen.

12. Verfahren zur Herstellung eines Kochgeschirrs (1) nach einem der vorstehenden Ansprüche, das die folgenden Schritte umfasst:
- Lieferung einer Struktur (2) eines Geschirr (1), die eine erste Fläche (6) und eine zweite (7) gegenüberliegende Fläche umfasst;
- Auftragen einer elektrisch leitenden Substanz, die eine oder mehrere elektrisch leitende Chargen umfasst;
- Auftragen eines aktiven Materials (14), das auf flüchtige Verbindungen (4), die aus dem Garen eines Nahrungsmittels hervorgehen, anspricht.

## Claims

1. Culinary item (1) including:
- a structure (2) that has a first (6) and a second (7) face that are opposite one another, and
- at least one means (3) for detecting volatile compounds from cooking an item of food (4) connected to a processing device (5) that is able to emit a signal if said volatile compounds (4) are detected by the detection means (3), said detection means (3) being integrated at least in the first face (6),
the detection means (3) comprising an active material, said active material (14) being able to modify its electric conduction properties in the presence of volatile compounds (4) and being a P or N doped semiconductor or a resistive-type material,
**characterised in that** the first face (6) is coated with a non-stick coating layer (13) and **in that** the detection means (3) is included in the thickness of the coating.

2. Culinary item (1) according to claim 1, **characterised in that** the first face (6) is arranged to be in contact with or facing an item of food.

3. Culinary item (1) according to any one of claims 1 to 2, **characterised in that** the non-stick coating (13) is sol-gel material based, or made from fluorocarbon resin forming a continuous sintered network, or made from silicone resin, or made from enamel.

4. Culinary item (1) according to one of claims 1 to 3, **characterised in that** said detection means (3) further comprises at least two connecting elements (15) ensuring the connection between the active material (14) and the processing device (5).

5. Culinary item (1) according to claim 4, **characterised in that** the detection means (3) and the processing device (5) form an electric circuit where the active material (14) has a varying resistance in the presence of volatile compounds (4) and, if an electric current passing through the processing device (5) is different from a predetermined threshold, the processing device (5) emits a signal.

6. Culinary item (1) according to one of claims 1 to 3, **characterised in that** said detection means (3) comprises a field-effect transistor (16) of which the channel is constituted of an active material (14) that is able to modify its electric conduction properties in the presence of volatile compounds (4).

7. Culinary item (1) according to claim 6, **characterised in that** the active material (14) is configured to allow the offsetting of a threshold voltage of the transistor (16) with a constant gate voltage.

8. Culinary item (1) according to claim 7, **characterised in that** the active material (14) has at least two states: an off state in the absence of volatile compounds; and
- a conductive state in the presence of volatile compounds and vice versa.

9. Culinary item (1) according to claim 4, **characterised in that** it comprises a sound or visual alert means (25) to the connecting elements (15) via the processing device (5).

10. Assembly (50) for cooking an item of food comprising a cover (11) and a cooking cap (8) of which at least one is the culinary item (1) according to one of the preceding claims, **characterised in that** the cover (11) and the cooking cap (8) are adapted such that the cover (11) covers an opening (12) of the cap (8) such that a cooking space is thus delimited where the detection means (3) is in contact with the volatile compounds (4).

11. System (100) comprising the culinary item (1) according to any one of claims 1 to 9 or the assembly (50) according to claim 10 and a device for heating (24) the culinary item (1) and/or an item of food arranged in said item (1), the heating device (24) and/or the culinary item (1) comprising control means receiving a signal from the processing device (5) for an adaptation of a heating duration and/or a temperature of the culinary item (1) and/or of the food, according to the signal emitted.

12. Method for manufacturing a culinary item (1) according to one of the preceding claims comprising the following steps:
- providing a structure (2) of an item (1) having a first face (6) and a second face (7) face that are opposite one another;
- application of an electroconductive substance comprising one or more electroconductive charge(s);
- application of an active material (14) sensitive to volatile compounds (4) from cooking an item of food.
